# EUROPÄISCHE PATENTSCHRIFT

(11) **EP 3 315 250 B1**
(45) Veröffentlichungstag und Bekanntmachung des Hinweises auf die Patenterteilung: **08.09.2021**
(21) Anmeldenummer: 17198686.2
(22) Anmeldetag: 26.10.2017
(51) Int. Cl.: B23Q 1/70, H02K 49/10

(54) **VORRICHTUNG ZUR HERSTELLUNG EINES WERKZEUGKOPFES EINES WERKZEUGS**
DEVICE FOR PRODUCING A TOOL HEAD OF A TOOL
DISPOSITIF DE FABRICATION D'UNE TÊTE D'OUTIL D'UN OUTIL

(30) Priorität: 01.11.2016 DE 102016120805
(43) Veröffentlichungstag der Anmeldung: 02.05.2018
(73) Patentinhaber: Technische Universität Kaiserslautern, 67663 Kaiserslautern (DE)
(72) Erfinder: Aurich, Jan C., 67661 Kaiserslautern (DE); Müller, Christopher, 67659 Kaiserslautern (DE)
(74) Vertreter: Müller, Jochen

(56) Entgegenhaltungen:
- EP-A1- 0 812 651
- JP-A- S58 661
- JP-A- S62 270 832

## Beschreibung

Die Erfindung bezieht sich auf eine Vorrichtung zur Herstellung eines Werkzeugkopfes eines Werkzeugs aus einem Werkzeugrohling mit einem Werkzeugschaft, umfassend einen Rotationsantrieb für den Werkzeugrohling und einer Aufnahme für den Werkzeugschaft.

Die zunehmende Miniaturisierung der Werkzeuge bei der spanenden Mikrobearbeitung von Werkstücken, insbesondere dem Mikroschleifen und Mikrofräsen, führt zu einer steigenden Nachfrage nach Bearbeitungsspindeln, die hohe Drehzahlen erreichen, da mit abnehmendem Werkzeugdurchmesser auch die effektive Schnittgeschwindigkeit sinkt. Andererseits steigt bei einem abnehmenden Werkzeugdurchmesser bzw. Bearbeitungsspindeldurchmesser die Signifikanz der Rundlaufabweichung der Bearbeitungsspindel sowie der Konzentrizität des Mikrowerkzeugs zum Schaft des Mikrowerkzeugs. Ein weiterer Faktor zur Beeinflussung der Rundlaufabweichung ist die Güte des Schafts, insbesondere die Konzentrizität des Werkzeugs zum Schaft, die Oberfläche, Zylindrizität, oder dergleichen, und die Genauigkeit des Spannsystems der Werkzeugmaschine.

Aus der DE 10 2013 104 811 A1 ist ein Bearbeitungszentrum mit mindestens einer Einrichtung zur Herstellung eines Mikroschleifstiftes aus einem Rohling bekannt, das eine Bearbeitungsvorrichtung für ein Werkstück umfasst, das mit dem hergestellten Mikroschleifstift ohne dessen Umspannung zu bearbeiten ist. Eine Bearbeitungsspindel weist eine Spanneinrichtung mit einer Spannzange zur klemmenden Aufnahme eines Schaftes des Mikroschleifstiftes bzw. des Rohlings, also eines Mikrowerkzeugs auf.

Die DE 10 2005 035 339 A1 offenbart eine Spindel mit Rotationsantrieb für ein Werkzeug mit einem Werkzeugschaft und einem Werkzeugkopf, umfassend einen Spindelstator und einen Spindelrotor, wobei der Spindelrotor innerhalb des Spindelstators um eine Rotationsachse drehbar gelagert und von einer Antriebseinheit in Rotation versetzbar ist. Der Spindelrotor ist im Wesentlichen von dem Werkzeug gebildet, wobei der Werkzeugschaft des Werkzeugs in einem Radiallager und einem Axiallager innerhalb des Spindelstators angeordnet ist. Das Radiallager ist ein aerostatisches oder aerodynamisches Lager. Der Rundlauf des Werkzeugs wird durch diese Lagerung nur noch von der Herstellgenauigkeit des Werkzeugs und des Spindelstators beeinflusst. Ein Einfluss auf die Konzentrizität des Kopfes des Werkzeugs zum Werkzeugschaft wird nicht genommen und ist unberücksichtigt.

Die EP 0 812 651 A1 offenbart eine weitere Spindel aus dem Stand der Technik.

Der Erfindung liegt die Aufgabe zugrunde, eine Rotationsspindel der eingangs genannten Art zu schaffen, die die Herstellung eines Werkzeugs mit geringfügigen Abweichungen in seinem Rundlauf ermöglicht.

Erfindungsgemäß wird die Aufgabe dadurch gelöst, dass die Aufnahme ein Luftlager zur unmittelbaren Lagerung des Werkzeugschaftes des Werkzeugrohlings umfasst und der Werkzeugschaft des Werkzeugrohlings kraftschlüssig mit dem als Schrittmotor ausgebildeten Rotationsantrieb gekoppelt ist.

Aufgrund des luftgelagerten Werkzeugschaftes ist die Konzentrizität des Werkzeugkopfes zum Werkzeugschaft gegenüber einer Einspannung in einer Spannzange, wie aus dem Stand der Technik bekannt, wesentlich verbessert und dementsprechend auch die Rundlaufeigenschaften des Werkzeugs insgesamt. Der nur wenige Mikrometer große Luftspalt des Luftlagers bewirkt durch die Eigenschaften der Luft einen Ausgleich bezüglich Form- und Größenabweichungen des Werkzeugschaftes zu der Aufnahme, also dem Stator der Vorrichtung, da der Werkzeugschaft selbst den Rotor bildet. Hieraus resultiert ein deutlich reduzierter Werkzeugbruch und ein verbessertes Bearbeitungsergebnis bei der Herstellung eines Werkstücks mittels des in der erfindungsgemäßen Vorrichtung gefertigten Werkzeugs. Das Luftlager kann als ein aerodynamisches oder ein aerostatisches Lager ausgebildet sein.

Mittels des Schrittmotors ist eine verhältnismäßig positionsgenaue Rotationsbewegung des Werkzeugrohlings und damit auch eine Einstellung des Werkzeugkopfes in einer definierten Winkellage zur Herstellung des Werkzeugs möglich.

In Ausgestaltung ist das Luftlager als ein aerostatisches Radiallager ausgebildet. Dementsprechend wird Druckluft zum Aufbau des den Werkzeugschaft lagernden Druckpolsters durch entsprechende Kanäle in das Lager eingeleitet.

Um den Werkzeugrohling bzw. dessen Werkzeugschaft auch bei der Verbindung mit dem Rotationsantrieb nicht vollständig starr zu haltern, weist bevorzugt der Rotationsantrieb eine Kupplung zur Übertragung axialer Kräfte und Drehmomente auf den Werkzeugschaft auf. Die Kupplung kann als eine elastische Kupplung bzw. eine Kupplung aus einer Festkörpergelenkkinematik ausgebildet sein. Die Kupplung soll vorrangig Momente um das Werkzeug und axiale Kräfte übertragen und in radialer Richtung nicht dem Luftlager entgegenwirken.

Vorzugsweise ist die Kupplung mit mindestens einem Magnet bestückt. Dementsprechend wird der in dem Luftlager ausgerichtete Werkzeugschaft insbesondere an seiner Stirnseite mittels Magnetkraft mit dem Rotationsantrieb verbunden.

Zweckmäßigerweise sind das Luftlager und die Kupplung in einem an dem Rotationsantrieb angeordneten Gehäuse untergebracht.

Um aus dem Werkzeugrohling ein Werkzeug zu fertigen, ist ein Schleifwerkzeug zur Fertigung des Werkzeugkopfs angeordnet.

Vorzugsweise ist das mit der Vorrichtung zu fertigende Werkzeug ein Mikrowerkzeug. Ein Mikrowerkzeug weist einen Durchmesser, insbesondere einen Werkzeugschaftdurchmesser, kleiner 50 µm, bevorzugt kleiner 30 µm, weiterhin bevorzugt kleiner 20 µm und besonders bevorzugt etwa 10 µm auf.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:

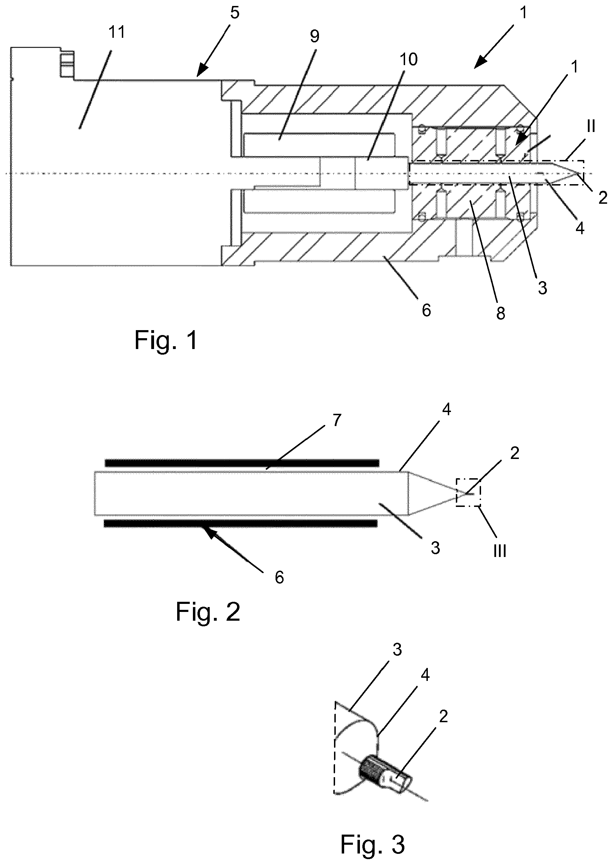

- Fig. 1: eine schematische Teildarstellung der erfindungsgemäßen Vorrichtung im Schnitt
- Fig. 2: eine vergrößerte Darstellung der Einzelheit II nach Fig. 1 und
- Fig. 3: eine vergrößerte Darstellung der Einzelheit III nach Fig. 2.

Die Vorrichtung zur Fertigung eines einen Werkzeugkopf 2 und einen Werkzeugschaft 3 umfassenden Werkzeugs 4 aus einem Werkzeugrohling, beispielsweise unter Einsatz eines Schleifwerkzeugs, umfasst einen Stator 1 mit einem als Schrittmotor 11 ausgebildeten Rotationsantrieb 5, wobei der Stator 1 Bestandteil eines den Schrittmotor 11 halternden Gehäuses 6 ist. Mittels des Schrittmotors 11 erfolgt eine exakte Einstellung des Werkzeugs 4 zu seiner Bearbeitung, insbesondere bezüglich des Drehwinkels des Werkzeugs 4 bzw. des Werkzeugkopfs 2.

Um den Werkzeugschaft 3 mit möglichst hoher Genauigkeit bezüglich der Rundlaufeigenschaften des Werkzeugs 4, insbesondere bezüglich des Werkzeugschaftes 4 zu dem Werkzeugkopf 2, in der Vorrichtung zu lagern, ist ein als aerostatisches Lager ausgebildetes Luftlager 6 derart in dem Gehäuse 6 vorgesehen, dass sich ein unmittelbar den Werkzeugschaft 3 umgebendes Luftpolster in einem Spalt 7 zwischen einer luftführenden Buchse 8 des Luftlagers 6 und dem Werkzeugschaft 3 ausbildet.

Damit keine die auf die Exzentrizität auswirkenden Einspannfehler aufgrund der Kopplung des Werkzeugschaftes 3 mit dem Schrittmotor 2 einstellen, ist zwischen dem Schrittmotor 11 und dem Werkzeugschaft 3 eine mit einem Magnet 10, insbesondere einem Permanentmagnet, bestückte Kupplung 9 vorgesehen. Der Magnet 5 verbindet das Werkzeug 4 kraftschlüssig mit dem Schrittmotor 11 ohne eine Zentrierung an der Kopplungsstelle vorzunehmen.

## Patentansprüche

1. Vorrichtung zur Herstellung eines Werkzeugkopfes (2) eines Werkzeugs (4) aus einem Werkzeugrohling mit einem Werkzeugschaft (3), umfassend einen Rotationsantrieb (5) für den Werkzeugrohling und einer Aufnahme für den Werkzeugschaft (3), wobei die Aufnahme ein Luftlager (6) zur unmittelbaren Lagerung des Werkzeugschaftes (3) des Werkzeugrohlings umfasst und der Werkzeugschaft (3) des Werkzeugrohlings kraftschlüssig mit dem als Schrittmotor (11) ausgebildeten Rotationsantrieb (5) gekoppelt ist.

2. Vorrichtung nach Anspruch 1, **dadurch gekennzeichnet, dass** das Luftlager (6) als ein aerostatisches Radiallager ausgebildet ist.

3. Vorrichtung nach Anspruch 1 oder 2, **dadurch gekennzeichnet, dass** der Rotationsantrieb (5) eine Kupplung (9) zur Übertragung axialer Kräfte und Drehmomente auf den Werkzeugschaft (3) aufweist.

4. Vorrichtung nach Anspruch 3, **dadurch gekennzeichnet, dass** die Kupplung (9) mit mindestens einem Magnet (10) bestückt ist.

5. Vorrichtung nach Anspruch 3 oder 4, **dadurch gekennzeichnet, dass** das Luftlager (6) und die Kupplung (9) in einem an dem Rotationsantrieb (5) angeordneten Gehäuse (6) untergebracht sind.

6. Anordnung umfassend ein Schleifwerkzeug und eine Vorrichtung nach Anspruch 1, **dadurch gekennzeichnet, dass** das Schleifwerkzeug zur Fertigung des Werkzeugkopfs (2) angeordnet ist.

7. Vorrichtung nach einem der Ansprüche 1 bis 5, **dadurch gekennzeichnet, dass** die Vorrichtung zur Fertigung eines Mikrowerkzeugs geeignet ist.

## Claims

1. Device for producing a tool head (2) of a tool (4) from a tool blank having a tool shank (3), the device comprising a rotary drive (5) for the tool blank and a receptacle for the tool shank (3), wherein the receptacle comprises an air bearing (6) for directly supporting the tool shank (3) of the tool blank, and the tool shank (3) of the tool blank is frictionally coupled to the rotary drive (5) designed as a stepper motor (11).

2. Device according to claim 1, **characterized in that** the air bearing (6) is designed as an aerostatic radial bearing.

3. Device according to either claim 1 or claim 2, **characterized in that** the rotary drive (5) comprises a coupling (9) for transmitting axial forces and torques to the tool shank (3).

4. Device according to claim 3, **characterized in that** the coupling (9) is provided with at least one magnet (10).

5. Device according to either claim 3 or claim 4, **characterized in that** the air bearing (6) and the coupling (9) are accommodated in a housing (6) arranged on the rotary drive (5).

6. Arrangement comprising a grinding tool and a device according to claim 1, **characterized in that** the grinding tool is designed to manufacture the tool head (2).

7. Device according to any of claims 1 to 5, **characterized in that** the device is suitable for manufacturing a micro tool.

## Revendications

1. Dispositif permettant de produire une tête d'outil (2) d'un outil (4) à partir d'une ébauche d'outil comportant une tige d'outil (3), comprenant un entraînement rotatif (5) pour l'ébauche d'outil et un logement pour la tige d'outil (3), le logement comprenant un palier d'air (6) permettant le montage direct de la tige d'outil (3) de l'ébauche d'outil et la tige d'outil (3) de l'ébauche d'outil étant accouplée à force à l'entraînement rotatif (5) conçu comme un moteur pas-à-pas (11).

2. Dispositif selon la revendication 1, **caractérisé en ce que** le palier d'air (6) est conçu comme un palier radial aérostatique.

3. Dispositif selon la revendication 1 ou 2, **caractérisé en ce que** l'entraînement rotatif (5) présente un accouplement (9) permettant de transmettre des forces axiales et des couples à la tige d'outil (3).

4. Dispositif selon la revendication 3, **caractérisé en ce que** l'accouplement (9) est équipé d'au moins un aimant (10).

5. Dispositif selon la revendication 3 ou 4, **caractérisé en ce que** le palier d'air (6) et l'accouplement (9) sont logés dans un boîtier (6) disposé sur l'entraînement rotatif (5).

6. Agencement comprenant un outil de meulage et un dispositif selon la revendication 1, **caractérisé en ce que** l'outil de meulage est disposé pour permettre la fabrication de la tête d'outil (2).

7. Dispositif selon l'une des revendications 1 à 5, **caractérisé en ce que** le dispositif est adapté pour permettre la fabrication d'un micro-outil.
